# EUROPEAN PATENT SPECIFICATION

(11) **EP 2 778 988 B1**
(45) Date of publication and mention of the grant of the patent: **03.07.2019**
(21) Application number: 14159941.5
(22) Date of filing: 14.03.2014
(51) Int. Cl.: G06F 16/957

(54) **Selectively activating a/v web page contents in electronic device**
Selektive Aktivierung von A/V-Webseiteninhalten in einer elektronischen Vorrichtung
Activation sélective de contenus de page Web A/V dans un dispositif électronique

(30) Priority: 15.03.2013 KR 20130027997
(43) Date of publication of application: 17.09.2014
(73) Proprietor: Samsung Electronics Co., Ltd., Suwon-si Gyeonggi-do 443-742 (KR)
(72) Inventor: Kim, Geon-Soo, Gyeonggi-do 443-742 (KR)
(74) Representative: Nederlandsch Octrooibureau

(56) References cited:
- EP-A1- 2 159 721
- WO-A2-02/47467
- US-A1- 2008 261 579
- US-A1- 2009 106 657
- US-A1- 2009 205 003
- Apple: "iOS-Specific Considerations", , 13 December 2012 (2012-12-13), pages 1-4, XP055461345, Retrieved from the Internet: URL:https://developer.apple.com/library/co ntent/documentation/AudioVideo/Conceptual/ Using_HTML5_Audio_Video/Device-SpecificCon siderations/Device-SpecificConsiderations. html#//apple_ref/doc/uid/TP40009523-CH5-SW 2 [retrieved on 2018-03-21]
- Punkchip: "Autoplay is bad for all users | Punkchip", , 6 May 2009 (2009-05-06), XP055461353, Retrieved from the Internet: URL:http://www.punkchip.com/autoplay-is-ba d-for-all-users/ [retrieved on 2018-03-21]
- Punkchip: "Autoplay is still bad for all users | Punkchip", , 24 July 2012 (2012-07-24), XP055461357, Retrieved from the Internet: URL:http://www.punkchip.com/autoplay-is-st ill-bad-for-all-users/ [retrieved on 2018-03-21]

## Description

### BACKGROUND

### 1. Technical Field

The present disclosure generally relates to web-browsing capable electronic devices.

### 2. Description of the Related Art

Today's portable electronic devices such as smart phones and tablet computers provide numerous functions which include Internet (web) surfing,, a multimedia player, an electronic book reader, a text editor, a game player, etc. For web browsing, when a user makes a request for a connection to a specific web page, HTML code of the web page to which an access is requested is parsed, and then contents of the web page are displayed in correspondence to a parsing result.

Web pages nowadays often provide a plurality of multimedia contents, such as audio contents and video contents. However, since the portable device provides the multimedia contents according to the parsing result of the web page's HTML code (for example, plays a music file and/or displays video contents), when a connection to the web page is accompanied with an automatic output of sound as soon as the web page is accessed, an inconvenient scenario may arise. For example, a connection may be made to a web page having HTML code causing background music (BGM) to be automatically played. In this case, if the user's environment is one in which noise is undesirable, e.g., during a class, a conference, or a public place, and a volume of the portable device is set high, the sudden playing of the music may be embarrassing to the user.

Further, the size of a portable device's display is relatively small compared to a PC monitor, and resolution may be inferior. Consequently, when a connection to a web page providing a plurality of video clips in different portions of the web page is established in a portable device, a smaller number of the video clips is viewable as compared to web surfing with a larger monitor. This limitation further inconveniences the user.

Accordingly, a need exists for a processing technique to provide a more convenient web browsing function in portable devices, which overcomes the aforementioned problems.

EP 2159721 describes a mobile terminal and a method for playing at least one multimedia object. The method comprises synchronizing at least one attribute value of the multimedia object with an attribute value corresponding to a capability of the multimedia player module provided in the mobile terminal and playing the multimedia object using the synchronized attribute value.

### SUMMARY

The invention provides a computer-implemented method, an apparatus and a computer program product as defined in the independent claims. Preferable embodiments of the invention are defined in the dependent claims.

### BRIEF DESCRIPTION OF THE DRAWINGS

The above and other aspects, features, and advantages of the present technology will be more apparent from the attached claims and from the following detailed description taken in conjunction with the accompanying drawings, in which:
FIG. 1 is a block diagram of an electronic device according to an embodiment of the present technology;
FIG. 2 is a flowchart of a method of processing a web page in an electronic device according to a first embodiment;
FIGS. 3A to 3D are respective first to fourth example diagrams illustrating operations of processing the web page according to the first embodiment;
FIG. 4 is a flowchart of a process of processing a web page according to a second embodiment; and
FIGS. 5A to 5D are respective first to fourth example diagrams illustrating operations of processing the web page according to the second embodiment.

### DETAILED DESCRIPTION

Hereinafter, various embodiments of the present technology will be described with reference to the accompanying drawings.

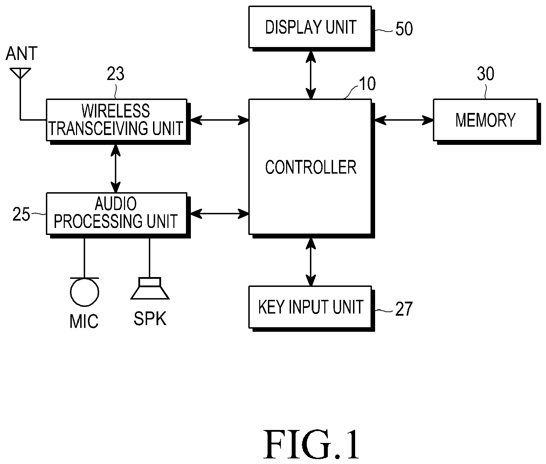

FIG. 1 is a block diagram of an example electronic device, 100, according to an embodiment of the present technology. Device 100 can be any computing device capable of receiving and displaying a web page, such as a smart phone, a cell phone, a portable or mobile terminal, a tablet computer, a notebook computer, an e-book reader, a personal digital assistant (PDA), a desktop computer, and so forth. Device 100 can operate in accordance with any of a variety of operating systems such as Windows 8, iOS, or Android.

As will be explained in detail below, device 100 is configured in one embodiment to receive a web page and process the page by analyzing its hypertext markup language (HTML) code to identify whether a tag (HTML tag) (or other type of information) related to automatic playing of audio contents is present, i.e., whether the web page contains "embedded audio".

Device 100 includes a wireless transceiving unit 23 which includes an RF unit and a modem. An RF unit includes an RF transmitter up-converting and amplifying a frequency of a transmitted signal, an RF receiver low-noise amplifying a received signal and down-converting its frequency, and the like. The modem includes a transmitter encoding and modulating a signal to be transmitted, a receiver demodulating and decoding a signal received from the RF unit, and the like. A user may play (for example, by streaming) audio contents and video contents provided by a web page by receiving the web page data from a web server through the wireless transceiving unit 23.

An audio processor 25 may configure a codec that includes a data codec and an audio codec. The data codec processes packet data and the like, and the audio codec processes an audio signal of a multimedia file or dedicated audio file. The audio processor 25 may serve a function of converting a digital audio signal received in the modem to an analog signal through the audio codec to play the converted analog signal, or converting an analog audio signal generated from a microphone to a digital audio signal through the audio codec to transmit the converted digital audio signal to the modem. The codec may be separately provided or included in a controller 10. The user may listen to a sound of audio contents or A/V (audio and video) contents provided in the received web page through the audio processor 25.

A key input unit 27 may include keys necessary for inputting numeral and character information and function keys necessary for setting various functions, and may include a touch pad or touch screen. When a display unit 50 is implemented in an electrostatic or pressure-sensitive touch screen scheme, the key input unit 27 may include predetermined minimum keys, and the display unit 50 may partially replace a key input function.

A memory 30 may include a program memory and data memories, and a program for controlling a general operation of device 100 is stored in the program memory. Memory 30 may further store one or more programs executable by a processor of controller 10 to carry out the functions of the embodiments for processing web pages described herein. The memory 30 may further include an external memory, such as a Compact Flash (CF) memory, a Secure Digital (SD) memory, a Micro Secure Digital (Micro-SD) memory, a Mini Secure Digital (Mini-SD) memory, an Extreme Digital (xD) memory, and a memory stick. Further, the memory 30 may include a disk, such as a Hard Disk Drive (HDD) and a Solid State Disk (SSD).

The display unit 50 may be formed of a Liquid Crystal Display (LCD) or an Organic Light Emitting Diode (OLED) (a PMOLED or an AMOLED as the OLED), and outputs various display information generated in device 100. The display unit 50 may include the electrostatic (or a capacitance scheme) or pressure-sensitive touch screen to be operated as an input unit controlling the portable device together with the key input unit 27. The user may view the web page displayed according to a connection request through the display unit 50, and may play A/V contents provided by the web page.

The controller 10 includes at least one processor, controls a general operation of device 100, and switches and controls the operation of the device according to the user's input through the key input unit 27 or the display unit 50. The controller 10 according to an embodiment of the present technology controls the general operation of analyzing an HTML code of a received web page, identifying a type of multimedia contents (e.g., audio or video contents) provided by the web page, and then adaptively performing web page processing according to the type of the multimedia contents.

For example, the controller 10 according to an embodiment controls a series of operations related to a process of analyzing an HTML code of the received web page, and identifying whether an HTML tag related to audio contents is present in the HTML code. If so, the controller identifies whether the tag indicates that audio contents are set to be automatically played upon receipt of the web page, and if this is the case, an interface is generated and displayed through which the playing of the audio contents may be controlled.

Further, the controller 10 according to the embodiment of the present technology controls a series of operations related to a process of identifying whether a tag related to the video contents is present in a received web page by analyzing an HTML code of the web page. The controller 10 also generates and commands the display of an interface through which the playing of the video contents may be controlled when it is identified that the tag related to the video contents is present.

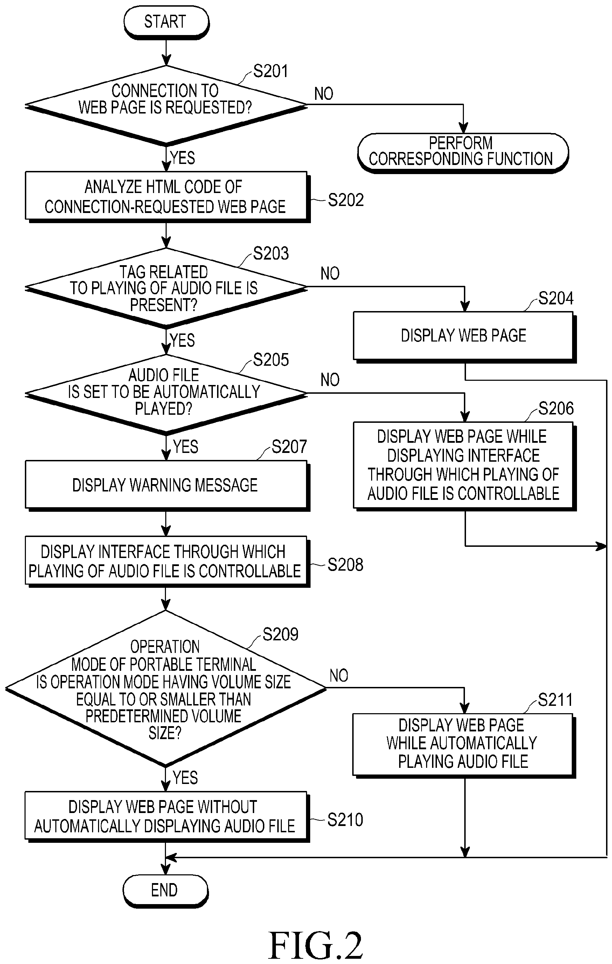

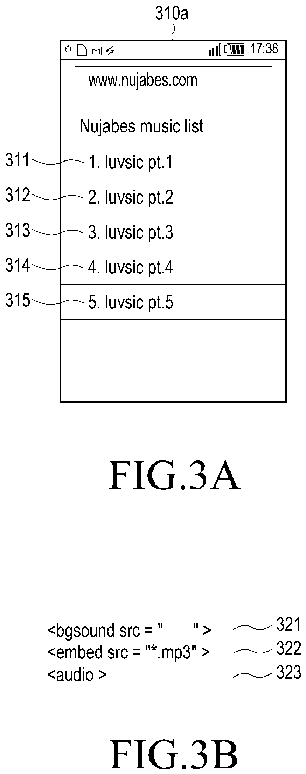

FIG. 2 is a flowchart of an example method, 200, of processing a web page in device 100 according to a first embodiment of the present technology, and FIGS. 3A to 3D are respective first to fourth example diagrams or screens illustrating the method of processing the web page according to the first embodiment. The first embodiment relates to processing a web page when a tag related to audio contents (for example, an audio file) is identified in a web page to be displayed according to a request of a user. The various operations in the method are executed by or under the control of controller 10.

In steps S201 to S203, when a connection to a server supplying the web page is requested, i.e., when the web page data is at least partially received from the server, the controller 10 analyzes HTML code of the web page to identify whether an information(ex., a tag (HTML tag)) related to audio contents is present in the web page data.

Referring to FIG. 3A, a displayed image (web page) 310a illustrates an example of a displayed web page providing information on music files 311 to 315. An example of the display of the displayed web page is illustrated.

Since the web page displayed like the displayed image 310a of FIG. 3A displays the information on the music file, there is a possibility that any one among the music files 311 to 315 may be set to be automatically played. Further, according to various embodiments of the present technology, even though the web page doesn't display the information of the music file unlike the displayed image 310a of FIG. 3A, there is still a possibility that any one among the music files 311 to 315 which are included as an HTML tag of the web page may be set to be automatically played. For example, when the connection to the web page server is established, the music file 311 may be automatically played by device 100 at a loud volume, inconveniencing the user.

Accordingly, the controller 10 according to the embodiment of the present invention makes the control so as to analyze the HTML code of the web page to which the connection is requested and identify whether the tag (HTML tag) related to the audio contents (or the play of the audio contents) is present. Through the identification, the controller 10 may also additionally identify that a type of multimedia contents provided by the web page to which the connection is requested is the audio contents (for example, an mp3 file).

FIG. 3B shows example HTML tags that may be received by device 100 in association with the web page. When HTML tags 321, 322, and 323 are present in the received web page's HTML code, a music file is provided through the web page according to an attribute of the corresponding tag (for example, a path and an extension of the music file).

Accordingly, when the HTML code, such as the example illustrated in FIG. 3B, is identified in the HTML codes of the web page to which the connection is requested, the controller 10 determines that the tag related to the audio contents (the play of the audio contents) is present in the corresponding web page.

However, when the HTML code, such as the example illustrated in FIG. 3B, isn't identified, the controller 10 may determine that the tag related to the audio contents is not present in the corresponding web page.

In step S204, when it is identified that the tag related to the playing of the audio contents is not present as a result of the identification of step S203, the web page is normally displayed, and no audio is played, according to the analysis of the HTML code.

As described above, when the HTML code, such as the example illustrated in FIG. 3B, is not identified as a result of the analysis of the HTML code of the web page to which the connection is requested, the controller 10 determines that the tag related to the audio contents is not present in the web page to which the connection is requested.

Then, the controller 10 controls the display process so that the web page is displayed through the displayed image of the display unit 50 so as to correspond to the result of the analysis of the HTML code of the web page. For example, the web page, such as the displayed image 310a of FIG. 3A, may be displayed.

Accordingly, it may be understood that the processing method of displaying the web page in a case where the tag related to the audio contents is not present in the embodiment of the present invention is the same processing method of displaying the web page in the related art.

In step S205, when it is identified that a tag related to audio contents is present as the result of the identification of step S203, the controller 10 identifies whether the corresponding tag indicates that the audio contents are set to be automatically played.

When it is determined that the tag related to the playing of the audio contents is present among the HTML codes of the received web page as a result of the identification of step S203, the controller 10 identifies whether the audio contents are set to be automatically played in the corresponding tag This may be recognized by identifying whether a phrase, such as autoplay TRUE or autoplay FALSE, is set in the corresponding tag related to the audio contents.

For example, in relation to the music file 311 in the web page displayed as the displayed image 310a in FIG. 3A, when a tag, such as <bgsound src="www.nujabes.com/luvsic pt.1.mp3 autoplay=true>, is identified, the controller 10 may identify that the corresponding audio contents are set to be automatically played.

In step S206, when it is identified that the automatic play of the audio contents is not activated as the result of the identification of step S205, the web page is displayed, which may include an interface through which the playing of the audio contents may be initiated through a user input. For instance, in relation to the music file 311 in the web page displayed as the displayed image 310a in FIG. 3A, when a tag, such as <bgsound src="www.nujabes.com/luvsic pt.1.mp3 autoplay=false>, is identified, the controller 10 may identify that the automatic play of the audio contents is not activated. In this case, the controller 10 displays the corresponding web page, and a display result may be displayed as illustrated in FIG. 3A. It is noted here, FIG. 3A shows a web page that does not include a control interface for playing any audio. In the present embodiment described further hereafter, the web page is modified by device 10 to add an audio control interface at least when automatic play information is detected in the HTML code.

In an embodiment of the present technology, in a case where it is identified that the tag related to the audio contents is present in the web page even though it is set that the audio contents of the web page are not automatically played, the interface, through which the playing of the audio contents is controllable, is displayed so as to provide a function enabling the user to rapidly control the playing of the audio contents.

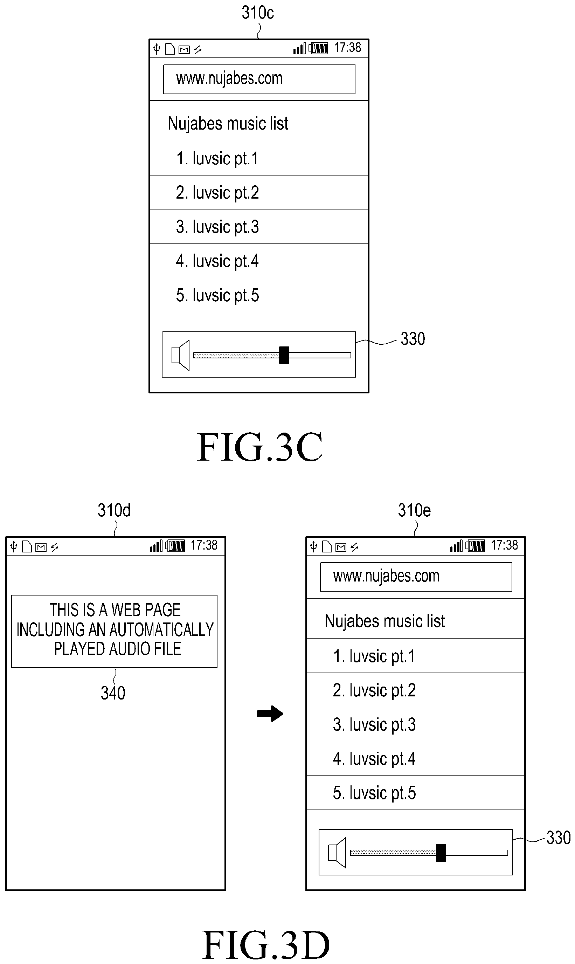

For example, referring momentarily to FIG. 3C, an example interface 330 is generated and displayed via the controller 10 according to an embodiment, through which the playing of the audio contents is controllable. Interface 330 may include a control handle slidable by the user to adjust volume of the audio contents. Although not shown, stop, pause and resume control elements of the interface 330 may also be displayed.

Through this, the user may rapidly control the playing of the audio contents without an additional control input such as manipulating a hard volume key on the body of the device 100. Once the user adjusts the volume level in this manner, the user may then make a request for the playing of the corresponding audio contents through another control operation (e.g., by directly touching any one of the list items 1 through 5 in FIG. 3C).

With continuing reference to FIG. 2, in steps S207 to S211, when it is identified that the automatic play of the audio contents is activated as the result of the identification of step S205, the controller 10 displays a warning message and then displays the interface through which the playing of the audio contents may be controlled, and controls displaying the web page while automatically playing the audio contents in a case where an operation condition of the portable terminal isn't a manner mode (e.g., a silent mode or a vibration mode) or the volume level isn't equal to or smaller than a predetermined volume level.

When it is identified that the audio contents are set to be automatically played as the result of the analysis of the HTML of the received web page the warning message (warning UI) denoted by reference numeral 340 in FIG. 3D and the interface 330 are displayed. The controller then determines whether the operation mode of the portable terminal has the volume equal to or less than the predetermined volume level.

On the contrary, when it is identified that the operation mode of the portable terminal has the volume larger than the predetermined volume level (for example, a normal mode, not the manner mode or the silent mode), the web page is displayed while automatically playing the audio contents.

For example, in an embodiment, in a case where the operation mode of the portable terminal is not the manner mode (a case where there is no problem even though the audio contents are played with a large volume size), the web page is displayed while the audio contents are automatically played according to the HTML code of the web page.

Accordingly, through an embodiment of the present technology, the user may avoid the inconvenient experience by which an automatic play of the music file causes embarrassment to the user when the connection to the web page server is established (i.e., when the web page is initially accessed).

For example, after step S210, the user may further adjust a play volume level of the music file by using a hardware key of the key input unit 27 or the interface 330 and then make a request for the playing of any predetermined audio contents identified on the web page through input for the web page.

Further, after step S211, the user may adjust a play volume level of the automatically played audio contents by rapidly controlling the volume through the interface 330 or the hardware key of the key input unit 27.

In steps S209 to S211, in a modified version of the first embodiment, instead of automatically playing the audio file at step S211 at a previously set volume level, the volume level is automatically reduced during the automatic play. That is, when a play volume level of the audio contents is set to be equal to or higher than a predetermined level (for example, in a case where the play volume level of the audio contents is set to have a maximum size), an embodiment, in which the play volume level is reset to be equal to or lower than the predetermined level may be automatically implemented. Thereafter, the audio contents may be played at the lower volume level.

Further, through another modification of the first embodiment, even when the music file is set to be automatically played, an embodiment, in which the music file is automatically played after an elapse of a predetermined time after the display of the warning message without the automatic play regardless of the setting of the manner mode may be applied. In yet another modification of the first embodiment, the music file is played only when the user allows the playing of the music file after the display of the warning message without the automatic play regardless of the setting of the manner mode. For example, user may enable the automatic playing via a predetermined touch input on the interface 330.

It is noted, the interface 330 illustrated in FIGS. 3C and 3D is shown to include volume control, but may be variously modified in alternative implementations of the technology. For example, other functions, such as play and pause, may be included in the interface 330.

Further, the interface 330 through which the playing of the audio contents may be controlled is displayed at a predetermined position, and FIGS. 3C and 3D illustrate an example in which the predetermined position of the interface 330 is a lower end of the display image. It is preferable that the predetermined position of the interface 330 is the most appropriate position causing little inconvenience in the use of the device 100. Further, the interface 330 may be displayed in a form of an overlay, and transparency thereof may also be modified according to a particular embodiment.

Further, it may be set in various embodiments that the interface 330 is not further displayed when a predetermined time elapses after the display of the interface, and the interface 330 is not further displayed when the input of the user (for example, the control of the volume) in the displayed interface 330 is completed.

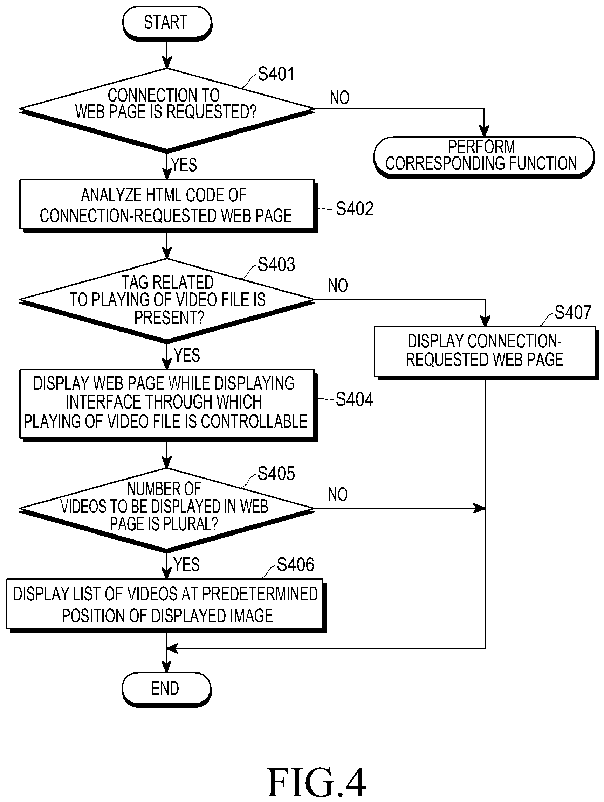

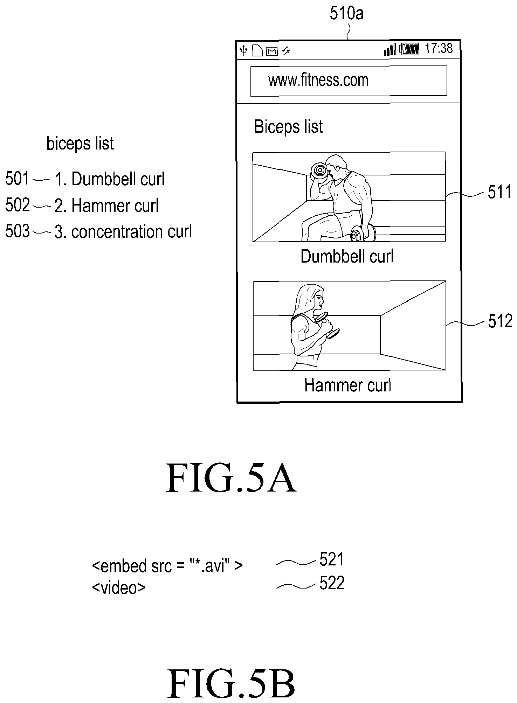

FIG. 4 is a flowchart of a method, 400, of processing a web page in device 100 according to a second embodiment of the present technology, and FIGS. 5A to 5D are respective first to fourth example diagrams illustrating the method of processing the web page according to the second embodiment. The second embodiment involves a technique by which a received web page is processed when a tag related to video contents (for example, playing of the video contents) is identified in the received web page.

Briefly, in one aspect of the second embodiment, device 100 analyzes received HTML code of a requested web page, and identifies a tag related to video contents in the web page. In response to identifying the tag, an interface (e.g., item 530 described below) is generated through which play of the video contents and accompanying sound is controllable, and this interface is displayed along with the web page. It is noteworthy that this generated interface is not defined by the received HTML code of the web page itself. In other words, the interface is newly generated by device 100, and is not defined by the web page designer.

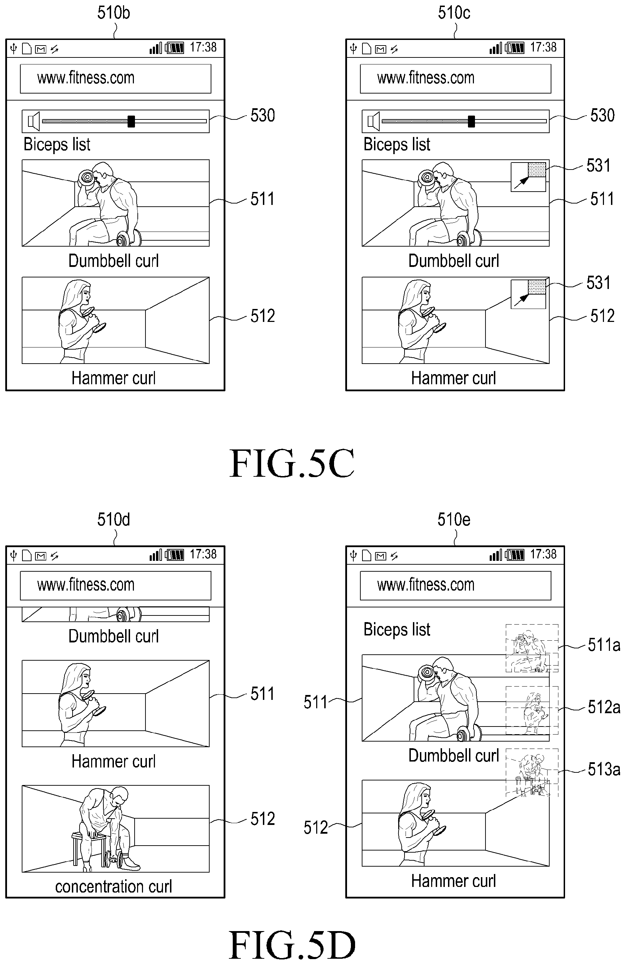

To facilitate an understanding of this embodiment, an example is presented in which a user makes a request for a web page containing multiple selectable video clips on exercise methods. Referring to FIG. 5A, an exercise list containing methods 501, 502, and 503 is represented by images 511, 512 and 513, respectively (where image 513 is seen in FIG. 5D, discussed below). That is, when an access to the web page is established in order to obtain the video information for the exercise methods 501, 502, and 503, the accessed web page displays video contents 511, 512, and 513, which correspond to the exercise methods 501, 502, and 503, respectively.

In steps S401 to S403, when the requested web page is received, controller 10 analyzes a received HTML code of the web page, to identify whether a tag related to a video (or related to playing video contents) is present in the web page.

When a method of processing the web page according to the prior art is applied to a case where the connection to the web page is requested in order to obtain the video information 501, 502, and 503 illustrated in FIG. 5A, only the two video contents 511 and 512 (or the information on the video contents, for example, thumbnails of the video contents) among the three items of video information may be displayed due to a limitation of a size of the display of the portable device 100 as illustrated by screen 510a of FIG. 5A.

That is, when the web page is processed (for example, displayed) according to the prior art, only the video contents 511 and 512 among the three video contents 511, 512, and 513 (not shown in FIG. 5A) are displayed, and an additional display of the video contents 513 for the displayed image 510a may be requested through scrolling.

Accordingly, in order to solve the aforementioned problem of the prior art, the controller 10 according to the second embodiment of the present technology analyzes received HTML code of the requested web page and identifies whether a tag (e.g., tag 521 or 522 of FIG. 5B) related to the video contents (or to the playing of the video contents) is present in the web page.

In step S404, when the tag is so identified, the controller 10 controls displaying the received web page in correspondence to a result of the analysis of the HTML code, while also displaying a generated interface 530 as shown in FIG. 5C through which the playing of the video contents (e.g., which may include the playing of audio accompanying the video contents) may be controlled.

Through step S404, the controller 10 allows the user to reproduce the displayed video contents 511 and 512 by displaying the web page in correspondence to the result of the analysis of the HTML code thereof. For example, the user may make a request for the playing of the video contents 511 through touch input for the video contents 511 in a displayed image 510b.

Additionally, through step S404, as shown in the displayed web page image 510b of FIG. 5C, the interface 530 through which the playing of the video contents may be controlled is displayed. Through this, the user may adjust a level of the sound output of the video contents before making the request for the playing of the displayed video contents (for example, the video contents 511 or 512).

Further, in an embodiment variation, the controller 10 may generate and control displaying of an interface 531 as shown in FIG. 5C together with the interface 530 at step S404. The interface 531 is an interface providing a function of pop-up play. Here, "pop-up play" may be known as various other types of names according to a manufacturer of the portable device. The pop-up play provides a function of displaying a played image, such as video contents or digital multimedia broadcasting, as a separate displayed image (for example, a displayed image having a relatively smaller size than the entire display unit), to enable a user to simultaneously watch the video contents and perform another task (for example, Internet surfing).

In steps S405 and S406, the controller 10 identifies whether the number of video contents to be displayed on the displayed web page is equal to or larger than a predetermined number (for example, identifies whether the number of video contents to be displayed on the displayed web page is two or more) based on the result of the analysis of the HTML code after the display of the web page. If yes, the controller 10 controls displaying a list of the video contents to be displayed at predetermined positions of the displayed image.

As described above, when only the video contents 511 and 512 are displayed, as in the displayed web pages 510b and 510c of FIG. 5C, the user may make a request for the playing of any one of the video contents 511 and 512 (e.g., by touching the video contents 511). However, in order to identify the video contents 513, which is not displayed, the user may make a request for the display of the video contents 513 through scrolling input, and thus the (partial) web page may be displayed as illustrated by the partial web page 510d of FIG. 5D. However, in a case where the number of video contents provided by the web page is large, it may be convenient for the user to input the scrolling input.

Accordingly, the controller 10 according to an embodiment of the present technology displays a list of the video contents provided by the web page at a predetermined position to allow the user to easily identify the list of the video contents provided by the web page. In this case, the list of the video contents may be displayed at the predetermined position of the displayed image, and the list of the video contents may be displayed in a form of a thumbnail of each of the video contents provided by the web page. Here, when information on the thumbnail (for example, link information on a thumbnail image) is present in the HTML code of the web page, the list of the video contents may be displayed in the form of the thumbnail, and when the information on the thumbnail is not present, the list of the video contents may be displayed in a form of summary information on the video contents (for example, an explanation or a title of the video contents provided in the HTML code of the web page).

For example, controller 10 controls displaying the list of the video contents provided by the web page in a form of reduced screens of the video contents 511, 512, and 513, such as reduced images 511a, 512a, and 513a illustrated in the displayed partial web page 510e of FIG. 5D at a right upper end thereof. Further, although not shown for simplicity of explanation of the feature just described, the interface 530 can also be displayed along with or superimposed with the partial web page 510e. That is, interface 530 may be automatically or manually displayed during the performance of the steps S403 to S405, and the corresponding displayed image 510e.

Next, when any item is selected in the displayed list of the video contents (for example, the reduced images 511a, 512a, and 513a), the controller 10 may provide a function of playing the corresponding video contents. For example, when the reduced image 512a is selected (touched) in the displayed image 510e of FIG. 5D, the controller 10 may control playing of the video contents 512 corresponding to the reduced image 512a.

Through the above-described second embodiment, when the list of the video contents to be displayed in the web page is displayed as shown with reference numerals 511a to 513a of the displayed partial page 510e, the user may easily identify that the video contents 513 is present following the video contents 512 without the scrolling input, and may also rapidly select the video contents desired to be played.

It should be noted, in the above examples, interface 530was described as providing only a volume control function in consideration of the purpose of the present technology solving inconvenience when the video contents are automatically played at a loud volume. However, interface 530 is not limited only to the provision of the volume control function. For example, the interface 530 may also provide other functions such as play, pause, and stop. In the meantime, the web page to which a connection is requested by the user may include an iframe tag (for example, <iframe src="http://www.naver.com/"></iframe>) loading and displaying a text (HTML) of another web page. It should be apparent to those skilled in the art that the above-described first and second embodiments of the present technology may be applied by reading and analyzing an HTML code of the web page in the iframe tag when the iframe tag is present. Further, in the second embodiment described above, a plurality of still image contents may be substituted for the video contents in the case of a web page providing still images (e.g., each with associated audio) rather than selectable video clips.

In step S407, when it is identified that the tag related to the video contents is not present in the received web page, the controller 10 controls displaying the received web page so as to correspond to a result of the analysis of the HTML code of the web page.

The above-described embodiments according to the present technology can be implemented in hardware, firmware or via the execution of software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the present invention has been shown and described with reference to certain embodiments thereof, it will be understood by those skilled in the art that various changes in form and details may be made therein without departing from the scope of the present invention as defined by the appended claims.

## Claims

1. A method of processing a web page in an electronic device (100), **characterized by**:
in response to a request for displaying the web page, analyzing (S202, S402) the web page;
determining (S203, S403) whether information corresponding to play of audio content is present within the web page;
when the information corresponding to the play of audio content is present within the web page (S203), determining (S205) whether (S205) the audio content is set to be automatically played; and
if the audio content is set to be automatically played, displaying (S208) the web page and a generated interface for controlling at least one of playback and a volume level of the audio content, when an operation condition of the electronic device is at least one of a silent mode and a vibration mode, and
automatically reducing the volume level of the audio content set to be automatically played during automatic play;
wherein, when the information corresponding to the play of audio content is absent from the web page, the web page is displayed without displaying the interface, and wherein generating (S205, S404) the interface (330, 530) comprises adding an interface not already defined by the hypertext markup language, HTML, code of the web page.

2. The method of claim 1, further **characterized by** displaying (S207) a warning message (340) indicating that automatic play of audio content is activated, prior to displaying the interface.

3. The method of claim 1, **characterized in that** the information corresponding to the play of the audio content is hypertext markup language, HTML, code of an HTML tag (321, 322, 323).

4. The method of claim 1, further **characterized by** ceasing to display the interface (330) when a predetermined time interval elapses.

5. The method of claim 1, further **characterized by** determining (S405) whether a number of video content to be displayed in at least a portion of the web page is equal to or larger than a predetermined number, and if so, displaying a list of video content of the web page at a predetermined position.

6. The method of claim 5, **characterized in that** the list of the video content is provided in a form of thumbnails of the video content.

7. An apparatus (100) for processing a web page in an electronic device, **characterized by**:
a display unit (50); and
a controller (10) configured to:
in response to a request for displaying the web page, analyze the web page;
determine whether information corresponding to play of audio content is present within the web page;
when the information corresponding to the play of audio content is present within the web page, determine whether the audio content is set to be automatically played;
if the audio content is set to be automatically played, display the web page and a generated interface for controlling at least one of playback and a volume level of the audio content, when an operation condition of the electronic device is at least one of a silent mode and a vibration mode, and
automatically reduce the volume level of the audio content set to be automatically played during automatic play;
wherein, when the information corresponding to the play of audio content is absent from the web page, the web page is displayed without displaying the interface and wherein generating (S205, S404) the interface (330, 530) comprises adding an interface not already defined by the hypertext markup language, HTML, code of the web page.

8. The apparatus (100) of claim 7, **characterized in that** the information is hypertext markup language, HTML, code of an HTML tag (321, 322, 323), and the controller (10) is further configured to:
identify that the HTML tag indicates that the audio content are not set to be played automatically, and generate the same or different interface (330) through which playing of the audio content is controllable, corresponding to the audio content not set to be played automatically.

9. Computer program product comprising computer instructions which, when executed on a processor of an electronic device, cause said electronic device to function according to any one of the claims 1-6.

## Patentansprüche

1. Verfahren zum Verarbeiten einer Webseite in einem elektronischen Gerät (100), **gekennzeichnet durch**:
Analysieren (S202, S402) der Webseite als Antwort auf eine Anforderung zum Anzeigen der Webseite,
Bestimmen (S203, S403), ob auf der Webseite Informationen vorhanden sind, die dem Abspielen von Audioinhalt entsprechen;
wenn die Informationen, die dem Abspielen von Audioinhalt entsprechen, auf der Webseite vorhanden sind (S203), Bestimmen (S205), ob (S205) der Audioinhalt so eingestellt ist, dass er automatisch abgespielt wird; und
wenn der Audioinhalt so eingestellt ist, dass er automatisch abgespielt wird, Anzeigen (S208) der Webseite und einer generierten Schnittstelle zum Steuern mindestens eines entweder der Wiedergabe und / oder des Lautstärkepegels des Audioinhalts, wenn ein Betriebszustand des elektronischen Geräts mindestens eins eines lautlosen Modus oder eines Vibrationsmodus ist und
automatisches Verringern des Lautstärkepegels des Audioinhalts, der eingestellt ist, um während der automatischen Wiedergabe automatisch abgespielt zu werden;
wobei, wenn die Informationen, die der Wiedergabe von Audioinhalt entsprechen, nicht auf der Webseite vorhanden sind, die Webseite angezeigt wird, ohne die Schnittstelle anzuzeigen, und wobei das Erzeugen (S205, S404) der Schnittstelle (330, 530) das Hinzufügen einer Schnittstelle umfasst, welche durch die Hypertext-Auszeichnungssprache, HTML-Code der Webseite noch nicht definiert wurde.

2. Verfahren nach Anspruch 1, weiter **gekennzeichnet durch** Anzeigen (S207) einer Warnmeldung (340), die anzeigt, dass die automatische Abspielung von Audioinhalt aktiviert ist, bevor die Schnittstelle angezeigt wird.

3. Verfahren nach Anspruch 1, **dadurch gekennzeichnet, dass** die Informationen, die der Abspielung von Audioinhalt entsprechen, Hypertext Markup Language, HTML, Code eines HTML-Tags (321, 322, 323) sind.

4. Verfahren nach Anspruch 1, weiter **gekennzeichnet durch** das Stoppen der Anzeige der Schnittstelle (330), wenn ein vorbestimmtes Zeitintervall abgelaufen ist.

5. Verfahren nach Anspruch 1, weiter **gekennzeichnet durch** Bestimmen (S405), ob eine Anzahl von Videoinhalten, die in mindestens einem Teil der Webseite angezeigt werden soll, gleich oder größer als eine vorbestimmte Anzahl ist, und wenn ja, Anzeigen einer Liste vom Videoinhalt der Webseite an einer vorbestimmten Position.

6. Verfahren nach Anspruch 5, **dadurch gekennzeichnet, dass** die Liste des Videoinhalts in Form von Miniaturansichten des Videoinhalts bereitgestellt wird.

7. Vorrichtung (100) zum Verarbeiten einer Webseite in einem elektronischen Gerät, **gekennzeichnet durch**:
eine Anzeigeeinheit (50); und
eine Steuerung (10), die konfiguriert ist um:
Analysieren (S202, S402) der Webseite als Antwort auf eine Anforderung zum Anzeigen der Webseite,
Bestimmen, ob auf der Webseite Informationen vorhanden sind, die dem Abspielen von Audioinhalt entsprechen;
wenn die Informationen, die der Wiedergabe von Audioinhalten entsprechen, auf der Webseite vorhanden sind, Bestimmen, ob der Audioinhalt so eingestellt ist, dass er automatisch abgespielt wird;
wenn der Audioinhalt so eingestellt ist, dass er automatisch abgespielt wird, Anzeigen der Webseite und einer generierten Schnittstelle zum Steuern mindestens eines der Abspielung und / oder des Lautstärkepegels des Audioinhalts, wenn ein Betriebszustand des elektronischen Geräts mindestens eines ist eines lautlosen Modus oder eines Vibrationsmodus, und
automatisches Verringern des Lautstärkepegels des Audioinhalts, der eingestellt ist, um während der automatischen Wiedergabe automatisch abgespielt zu werden.
wobei, wenn die Informationen, die der Wiedergabe von Audioinhalten auf der Webseite nicht vorhanden sind, die Webseite angezeigt wird, ohne die Schnittstelle anzuzeigen, und wobei das Erzeugen (S205, S404) der Schnittstelle (330, 530) das Hinzufügen einer Schnittstelle umfasst, welche durch die Hypertext-Auszeichnungssprache, HTML-Code der Webseite noch nicht definiert wurde.

8. Vorrichtung (100) nach Anspruch 7, **dadurch gekennzeichnet, dass** die Informationen eine Hypertext-Auszeichnungssprache, HTML-Code eines HTML-Tags (321, 322, 323) sind, und die Steuerung (10) ferner so konfiguriert ist, dass sie:
Identifiziert, dass das HTML-Tag anzeigt, dass der Audioinhalt nicht so eingestellt ist, dass er automatisch abgespielt wird, und dieselbe oder eine andere Schnittstelle (330) generiert, durch die das Abspielen des Audioinhalts steuerbar ist, in Bezug auf den Audioinhalt, der nicht so eingestellt ist, dass er automatisch abgespielt wird.

9. Computerprogrammprodukt mit Computeranweisungen, die, wenn sie auf einem Prozessor eines elektronischen Geräts ausgeführt werden, bewirken, dass das elektronische Gerät gemäß einem der Ansprüche 1 bis 6 funktioniert.

## Revendications

1. Procédé de traitement d'une page web dans un dispositif électronique (100), **caractérisé par** :
en réponse à une demande d'affichage de la page web, analyser (S202, S402) la page web ;
déterminer (S203, S403) si l'information correspondant à la lecture de contenu audio est présente dans la page web ;
lorsque l'information correspondant à la lecture de contenu audio est présente dans la page web (S203), déterminer (S205) si (S205) le contenu audio est réglé pour être automatiquement lu ; et
si le contenu audio est réglé pour être automatiquement lu, afficher (S208) la page web et une interface générée pour commander au moins l'un parmi la relecture et un niveau de volume du contenu audio, lorsqu'une condition d'opération du dispositif électronique est au moins l'un parmi un mode silencieux et un mode vibreur, et
réduire automatiquement le niveau de volume du contenu audio réglé pour être lu automatiquement pendant la lecture automatique ;
où, lorsque l'information correspondant à la lecture de contenu audio est absente de la page web, la page web est affichée sans afficher l'interface, et où la génération (S205, S404) de l'interface (330, 530) comprend l'ajout d'une interface qui n'a pas encore été définie par le code de langage de balisage hypertexte, HTML, de la page web.

2. Procédé selon la revendication 1, **caractérisé en outre par** l'affichage (S207) d'un message d'avertissement (340) indiquant que la lecture automatique de contenu audio est activée, avant l'affichage de l'interface.

3. Procédé selon la revendication 1, **caractérisé en ce que** l'information correspondant à la lecture du contenu audio est un code de langage de balisage hypertexte, HTML, d'une balise HTML (321, 322, 323).

4. Procédé selon la revendication 1, **caractérisé en outre par** l'interruption de l'affichage de l'interface (330) après l'écoulement d'un intervalle de temps prédéterminé.

5. Procédé selon la revendication 1, **caractérisé en outre par** la détermination (S405) de si un nombre de contenu vidéo à afficher sur au moins une portion de la page web est égal ou supérieur à un nombre prédéterminé, et s'il en est ainsi, l'affichage d'une liste de contenu vidéo de la page web dans une position prédéterminée.

6. Procédé selon la revendication 5, **caractérisé en ce que** la liste du contenu vidéo est pourvue ayant la forme de miniatures du contenu vidéo.

7. Dispositif (100) pour le traitement d'une page web dans un dispositif électronique, **caractérisé par** :
une unité d'affichage (50) ; et
un contrôleur (10) configuré pour :
en réponse à une demande d'affichage de la page web, analyser la page web ;
déterminer si l'information correspondant à la lecture de contenu audio est présente dans la page web ;
lorsque l'information correspondant à la lecture de contenu audio est présente dans la page web, déterminer si le contenu audio est réglé pour être lu automatiquement ;
si le contenu audio est réglé pour être lu automatiquement, afficher la page web et une interface générée pour commander au moins l'un parmi la relecture et un niveau de volume du contenu audio, lorsqu'une condition d'opération du dispositif électronique est au moins l'un parmi un mode silencieux et un mode vibreur, et
réduire automatiquement le niveau de volume du contenu audio réglé pour être lu automatiquement pendant la lecture automatique ;
où, lorsque l'information correspondant à la lecture de contenu audio est absente de la page web, la page web est affichée sans afficher l'interface et où la génération (S205, S404) de l'interface (330, 530) comprend l'ajout d'une interface qui n'a pas encore été définie par le code de langage de balisage hypertexte, HTML, de la page web.

8. Dispositif (100) selon la revendication 7, **caractérisé en ce que** l'information est un code de langage de balisage hypertexte, HTML, d'une balise HTML (321, 322, 323), et le contrôleur (10) est configuré en outre pour :
identifier que la balise HTML indique que le contenu audio n'est pas réglé pour être lu automatiquement, et générer la même ou une différente interface (330) à travers laquelle la lecture du contenu audio est contrôlable, correspondant au contenu audio qui n'est pas réglé pour être lu automatiquement.

9. Produit de programme informatique comprenant des instructions informatiques qui, lorsqu'elles sont exécutées sur un processeur d'un dispositif électronique, font ledit dispositif électronique fonctionner selon l'une quelconque des revendications 1-6.
